(19) Europäisches Patentamt
European Patent Office
Office européen des brevets

(11) Veröffentlichungsnummer: **0 297 275 B1**

(12) **EUROPÄISCHE PATENTSCHRIFT**

(45) Veröffentlichungstag der Patentschrift: **25.09.91**

(51) Int. Cl.5: **C01G 23/053**, C22B 34/12, C01B 17/90

(21) Anmeldenummer: **88108228.3**

(22) Anmeldetag: **24.05.88**

Die Akte enthält technische Angaben, die nach dem Eingang der Anmeldung eingereicht wurden und die nicht in dieser Patentschrift enthalten sind.

# (54) Verfahren zur Herstellung von Titandioxid.

(30) Priorität: **04.06.87 DE 3718674**

(43) Veröffentlichungstag der Anmeldung:
**04.01.89 Patentblatt 89/01**

(45) Bekanntmachung des Hinweises auf die Patenterteilung:
**25.09.91 Patentblatt 91/39**

(84) Benannte Vertragsstaaten:
**BE DE FR GB IT NL**

(56) Entgegenhaltungen:
**DE-B- 1 173 074**
**FR-A- 2 366 219**
**GB-A- 214 483**
**US-A- 1 655 940**

(73) Patentinhaber: **BAYER AG**
**W-5090 Leverkusen 1 Bayerwerk(DE)**

(72) Erfinder: **Schultz, Karl-Heinz, Dr.**
**Deswatinesstrasse 61**
**W-4150 Krefeld(DE)**
Erfinder: **Lailach, Günter, Dr.**
**Bismarckstrasse 109**
**W-4150 Krefeld(DE)**
Erfinder: **Gerken, Rudolf, Dr.**
**Ratherstrasse 79**
**W-4150 Krefeld(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die vorliegende Erfindung betrifft ein Verfahren zur Herstellung von Titandioxid nach dem Sulfatverfahren durch Aufschluß von Titanrohstoffen mit Schwefelsäure, Hydrolyse des dabei erzeugten Titanylsulfates, Abtrennen der Dünnsäure vom Hydrolysat, Eindampfen der Dünnsäure bis zu einer solchen Konzentration, daß eine 60 bis 70 %ige Schwefelsäure von den enthaltenen festen Metallsulfaten abgetrennt wird und Wiederverwendung der eingedampften Schwefelsäure beim Titanrohstoffaufschluß.

Aus der DE-B 1 173 074 ist ein Verfahren zur Aufarbeitung von Dünnsäure durch Eindampfen in Tauchbrenner-Eindampfern bekannt, wobei die enthaltenen festen Metallsulfate von der 60 bis 70 %igen Schwefelsäure abgetrennt werden und diese Schwefelsäure in gußeisernen Kesseln mit Dephlegmator bei 300 bis 330° C auf eine Konzentration von 93,5 bis 95 % $H_2SO_4$-Gehalt eingedampft wird. Diese hochkonzentrierte Schwefelsäure wird nach Abtrennung der Metallsulfate beim Titanrohstoffaufschluß eingesetzt. Nachteilig an diesem Verfahren sind die sehr hohen spezifischen Anlagekosten, ein hoher Energieverbrauch und großer Reparaturaufwand.

Aus der EP-B 133 505 ist ein Verfahren zur Eindampfung von Dünnsäure in mehreren Stufen unter Vakuum bekannt, bei dem eine Suspension von Metallsulfaten in 62 bis 70 %iger Schwefelsäure entsteht. Diese Säure wird entweder direkt oder nach weiterem Eindampfen auf eine Konzentration von 75 bis 85 % $H_2SO_4$-Gehalt beim Titanrohstoffaufschluß eingesetzt. Nachteilig an diesem Verfahren ist, daß Oleum benötigt wird, um durch Mischen mit der zurückgewonnenen Säure die für die Aufschlußreaktion erforderliche Konzentration zu erreichen. Insbesondere bei einem hohen Anteil der zurückgewonnenen Schwefelsäure an der Gesamtmenge der zum Titanrohstoffaufschluß benötigten Schwefelsäure, wie er sich vor allem bei der Verarbeitung von Titanschlacke ergibt, besteht die Notwendigkeit, die zurückgewonnene Schwefelsäure auf Konzentrationen im Bereich von 80 bis 96 % $H_2SO_4$ einzudampfen. Dabei liegt die Konzentration im unteren Bereich, wenn Oleum zur Verfügung steht und im oberen Bereich, wenn nur 95 bis 98 %ige Schwefelsäure verfügbar ist, um für die Aufschlußreaktion eine Mischsäure mit 88 bis 93 % $H_2SO_4$-Gehalt bereitzustellen. Die Kosten für die Konzentrierung der zurückgewonnenen Schwefelsäure steigen aber bei höheren Konzentrationen überproportional an und beeinträchtigen somit die Wirtschaftlichkeit der Titandioxidherstellung.

Aus der US-A-1655 940 geht hervor, daß die nach der Hydrolyse von Titanylsulfat erhaltene 40 % je Dünnsaüre mit konzentrierter Schwefelsäure aufereichert und beim Titanerzaufschluß wieder verwendet werden kann. Es kann auch die Dünnsaüre zur $SO_3$- Absorption verwendet werden, um dann ein Erzaufschluß eingesetzt zu werden.

Aufgabe der vorliegenden Erfindung ist es also, ein Verfahren zur Verfügung zu stellen, das die Nachteile der oben beschriebenen Verfahren vermeidet.

Diese Aufgabe wird erfindungsgemäß dadurch erreicht, daß die aus der Dünnsäure zurückgewonnene 60 bis 70 %ige Schwefelsäure weiter eingedampft wird bis zu einer Schwefelsäurekonzentration von 70 bis 80 %, wonach ein Teil dieser Schwefelsäure zur Absorption des $SO_3$ verwendet wird und das die dabei gebildete ca. 98 %ige Schwefelsäure zusammen mit dem Rest der 70 bis 80 %igen zurückgewonnenen Schwefelsäure beim Titanrohstoffaufschluß eingesetzt wird.

Gegenstand der vorliegenden Erfindung ist somit ein Verfahren zur Herstellung von Titandioxid nach dem Sulfatverfahren durch Aufschluß von Titanrohstoffen mit Schwefelsäure, Hydrolyse des dabei erzeugten Titanylsulfates, Abtrennen der Dünnsäure vom Hydrolysat, Eindampfen der Dünnsäure bis zu einer solchen Konzentration, daß eine 60 bis 70 %ige Schwefelsäure von den enthaltenen festen Metallsulfaten abgetrennt wird und Wiederverwendung der eingedampften Schwefelsäure beim Titanrohstoffaufschluß, wobei die 60 bis 70 %ige Schwefelsäure in einer weiteren Eindampfstufe II auf eine Konzentration von 70 bis 80 % $H_2SO_4$ eingedampft wird und ein Teil dieser Schwefelsäure durch Absorption von $SO_3$ auf eine Konzentration von 98 bis 99 % $H_2SO_4$ gebracht und anschließend zusammen mit dem verbleibenden Rest der 70 bis 80 %igen eingedampften Schwefelsäure beim Titanrohstoffaufschluß verwendet wird. Vorzugsweise wird das $SO_3$ durch katalytische Oxidation des $SO_2$ erzeugt, das bei der thermischen Spaltung der aus der Dünnsäure abgetrennten Metallsulfate anfällt.

Im einzelnen besteht das erfindungsgemäße Verfahren aus folgenden Prozeßabschnitten:
Die auf bekannte Weise, z.B. gemäß EP-B 133 505 durch Eindampfen der Dünnsäure und Abtrennen der Metallsulfate erhaltene 60 bis 70 %ige Schwefelsäure wird auf eine Konzentration im Bereich von 70 bis 80 % $H_2SO_4$-Gehalt eingedampft. Diese Eindampfung kann vorteilhaft mittels Abwärme aus der $TiO_2$-Kalzinierung erfolgen, wie sie z.B. in der EP-C 97 259 beschrieben ist. In einer besonders bevorzugten Ausführungsform des erfindungsgemäßen Verfahrens wird die 70 bis 80 %ige Schwefelsäure so aufgeteilt, daß durch Mischen der 98 bis 99 %igen Schwefelsäure mit der restlichen 70 bis 80 %igen Schwefelsäure eine Schwefelsäurekonzentration im Bereich von 88 bis 93 % entsteht. Besonders bevorzugt wird die Eindampfstufe II unter Vakuum in Zwangsumlaufverdampfern mit Graphitwärmeaustauschern durchgeführt. Ebenso ist es aber auch möglich, die Eindampfstufe II unter Vakuum in Zwangsumlaufverdampfern oder Horizontalverdampfern mit Tantalrohrwärmeaustauschern durchzuführen.

Da das erfindungsgemäße Verfahren nur eine Konzentrierung auf etwa 70 bis 80 % $H_2SO_4$-Gehalt erfordert, können bei der Eindampfung unter Vakuum günstige Bedingungen eingehalten werden, die relativ kleine Wärmeübertragungsflächen, günstige Konstruktionsmaterialien und sehr geringe Schwefelsäureverluste ermöglichen.

Besonders vorteilhaft ist es, daß eine Schwefelsäurekonzentration im geforderten Bereich auch durch Abwärmenutzung wie in EP-C 97 259 erreicht werden kann.

Die durch Eindampfen erhaltene 70 bis 80 %ige Schwefelsäure wird erfindungsgemäß in zwei Teile aufgeteilt, von denen der eine zur Absorption von $SO_3$ verwendet wird. Das $SO_2$, aus dem das $SO_3$ durch katalytische Oxidation hergestellt wurde, wird vorzugsweise durch thermische Spaltung der aus der Dünnsäure abgetrennten Metallsulfate erzeugt. Die Absorption des $SO_3$ erfolgt auf bekannte Weise bei Temperaturen von 80 bis 150°C in 98 bis 99 %iger Schwefelsäure, wobei erfindungsgemäß statt Wasser ein Teil der zurückgewonnenen 70 bis 80 %igen Schwefelsäure zugegeben wird. Die produzierte 98 bis 99 %ige, gelöste Metallsulfate enthaltende Schwefelsäure kann vorteilhaft ohne Abkühlen direkt beim Titanrohstoffaufschluß eingesetzt werden. Eine besonders bevorzugte Verfahrensvariante des erfindungsgemäßen Verfahrens besteht somit darin, daß die 98 bis 99 %ige Schwefelsäure ohne Abtrennung der Metallsulfate, vorzugsweise mit einer Temperatur von 40 bis 130°C, direkt beim Titanrohstoffaufschluß eingesetzt wird. In diesem Fall bewirkt die fühlbare Wärme der Säure den Start der Aufschlußreaktion, ohne das Wasser oder Dampf in die Rohstoffmischung eingetragen werden muß. Es ist aber im Sinne der Erfindung auch möglich, die 98 bis 99 %ige metallsulfathaltige Schwefelsäure auf Temperaturen zwischen 40 bis 70°C abzukühlen und gegebenenfalls die Metallsulfate abzutrennen. Eine weitere erfindungsgemäße Verfahrensvariante besteht somit darin, daß die 98 bis 99 %ige Schwefelsäure auf 40 bis 70°C abgekühlt und die kristallisierten Metallsulfate und/oder Hydrogensulfate abgetrennt werden, bevor die Schwefelsäure beim Titanrohstoffaufschluß eingesetzt wird.

Die Konzentration der durch Eindampfen zurückgewonnenen 70 bis 80 %igen Schwefelsäure und der Anteil dieser Säure, der zur $SO_3$-Absorption eingesetzt wird, richten sich danach, wie hoch der Anteil der durch Eindampfen zurückgewonnenen Schwefelsäure an der Gesamtmenge der zum Rohstoffaufschluß benötigten Schwefelsäure ist und welche Schwefelsäurekonzentration bei dem gegebenen Titanrohstoff zu Beginn der Aufschlußreaktion gefordert ist. Der Fachmann kann diese Mengenverhältnisse rechnerisch ermitteln.

Die Erfindung wird im folgenden beispielhaft erläutert, ohne das hierin eine Beschränkung auf die Beispiele zu sehen ist.

Vergleichsbeispiel:

Beim Herstellen von Titandioxid aus Titanschlacke sollen 60 % der für den Schlackeaufschluß benötigten Schwefelsäure als Schwefelsäure, die aus Dünnsäure durch Eindampfen zurückgewonnen wurde, und 40 % als 98 %ige, durch Umsetzung von $SO_3$ mit Wasser erzeugte Schwefelsäure zum Einsatz kommen. Die Schwefelsäurekonzentration zu Beginn der Aufschlußreaktion soll 90 % betragen (Konzentrationsangaben erfolgen als Gew.-% in salzfreier Säure, d.h.

$$\frac{H_2SO_4}{H_2SO_4 + H_2O} \times 100$$

ohne Berücksichtigung gelöster oder suspendierter Metallsulfate).

Entsprechend den gestellten Forderungen sind pro 1 t 90 %ige Aufschlußschwefelsäure 367,3 kg 98 %ige Schwefelsäure und 632,7 kg zurückgewonnene Schwefelsäure mit einer Konzentration von 85,3 % $H_2SO_4$ erforderlich. Die Herstellung dieser Schwefelsäure aus zurückgewonnener 65 %iger Schwefelsäure ist nicht mehr möglich durch Abwärmenutzung gemäß EP-A-97 259. Die Konzentrierung erfolgt deshalb bei Temperaturen bis 165°C und 80 mbar in einem Horizontalverdampfer. Dabei müsen 198 kg Wasser aus 830,7 kg 65 %iger Schwefelsäure verdampft werden, um 1 t 90 %iger Aufschlußsäure zu erhalten, wobei ca. 340 kg 15 bar-Dampf verbraucht werden.

Beispiel 1

Die Forderungen bezüglich der Zusammensetzung der Schwefelsäure zu Beginn der Aufschlußreaktion sind die gleichen wie im Vergleichsbeispiel. Die Gewichtangaben beziehen sich auf die Herstellung von 1 t 90 %iger Schwefelsäure, entsprechend 900 kg $H_2SO_4$. Erfindungsgemäß werden 830,7 kg 65 %iger Schwefelsäure nur auf eine Konzentration von 76,5 % $H_2SO_4$ eingedampft. Die Verdampfung von 125 kg Wasser erfolgt in einem Zwangsumlaufverdampfer mit Graphitwärmeaustauscher bei 60 mbar und 125°C. Es werden ca. 210

kg 6 bar-Dampf verbraucht.

Von der auf 76,5 % $H_2SO_4$ eingedampften Schwefelsäure werden 376,7 kg direkt beim Rohstoffaufschluß eingesetzt. 327 kg werden in den $SO_3$-Absorber der Schwefelsäure-Produktionsanlage eingespeist. Entsprechend der Einspeisung werden 623 kg 98,2 %ige Schwefelsäure mit einer Temperatur von 120° C ausgespeist und zum Titanschlacke-Aufschluß verwendet.

Beispiel 2

Das Verhältnis von durch Eindampfen zurückgewonnener Schwefelsäure zu Schwefelsäure, die durch Reaktion von $SO_3$ mit Wasser hergestellt wurde, soll wie im Vergleichsbeispiel sein. Die Konzentration der Schwefelsäure zu Beginn der Aufschlußreaktion soll aber 92 % statt 90 % sein. Die Gewichtsangaben beziehen sich auf 978,3 kg 92 %ige Schwefelsäure, entsprechend 900 kg $H_2SO_4$. Erfindungsgemäß werden 830,7 kg 65 %ige Schwefelsäure in einem Horizontalverdampfer mit Tantalrohrbündelwärmeaustauscher auf eine Konzentration von 78,9 % $H_2SO_4$ eingedampft. Die Eindampfung erfolgt bei Temperaturen von 100 bis 145° C und 100 mbar. Es müssen 146,3 kg Wasser aus der Schwefelsäure verdampft werden. Dafür werden ca. 240 kg 12 bar-Dampf benötigt. 310 kg 78,9 %ige Schwefelsäure werden direkt beim Rohstoffaufschluß eingesetzt; 374,3 kg werden zur S $O_3$-Absorption verwendet. Entsprechend werden 668,3 kg 98,1 %ige Schwefelsäure aus der $SO_3$-Absorption ausgespeist und beim Rohstoffaufschluß eingesetzt.

(Nach dem Stand der Technik, wie er im Vergleichsbeispiel beschrieben ist, müßte die durch Eindampfen zurückgewonnene Schwefelsäure auf 88,4 % eingedampft werden. Der Dampfverbrauch läge ca. 10 % höher als im Vergleichsbeispiel und ca. 55 % höher als im obigen Beispiel 2).

## Patentansprüche

1. Verfahren zur Herstellung von Titandioxid nach dem Sulfatverfahren durch Aufschluß von Titanrohstoffen mit Schwefelsäure, Hydrolyse des dabei erzeugten Titanylsulfates, Abtrennen der Dünnsäure vom Hydrolysat, Eindampfen der Dünnsäure bis zu einer solchen Konzentration, daß eine 60 bis 70 %ige Schwefelsäure von den enthaltenen festen Metallsulfaten abgetrennt wird und Wiederverwendung der eingedampften Schwefelsäure beim Titanrohstoffaufschluß, dadurch gekennzeichnet, daß die 60 bis 70 %ige Schwefelsäure in einer weiteren Eindampfstufe II auf eine Konzentration von 70 bis 80 % $H_2SO_4$ eingedampft und, daß ein Teil dieser Schwefelsäure durch Absorption von $SO_3$ auf eine Konzentration von 98 bis 99 % $H_2SO_4$ gebracht und anschließend mit dem verbleibenden Teil der 70 bis 80 %igen eingedampften Schwefelsäure beim Titanrohstoffaufschluß verwendet wird.

2. Verfahren gemäß Anspruch 1, dadurch gekennzeichnet, daß die 70 bis 80 %ige Schwefelsäure so aufgeteilt wird, daß durch Mischen der 98 bis 99 %igen Schwefelsäure mit der restlichen 70 bis 80 %igen Schwefelsäure eine Schwefelsäurekonzentration im Bereich von 88 bis 93 % entsteht.

3. Verfahren gemäß einem der Ansprüche 1 bis 2, dadurch gekennzeichnet, daß die Eindampfstufe II unter Vakuum in Zwangsumlaufverdampfern mit Graphitwärmeaustauschern erfolgt.

4. Verfahren gemäß einem der Ansprüche 1 bis 2, dadurch gekennzeichnet, daß die Eindampfstufe II unter Vakuum in Zwangsumlaufverdampfern oder Horizontalverdampfern mit Tantalrohrwärmeaustauschern erfolgt.

5. Verfahren gemäß einem oder mehrerer der Ansprüche 1 bis 4, dadurch gekennzeichnet, daß die 98 bis 99 %ige Schwefelsäure ohne Abtrennung der Metallsulfate mit einer Temperatur von 40 bis 130° C direkt beim Titanrohstoffaufschluß eingesetzt wird.

6. Verfahren gemäß einem oder mehrerer der Ansprüche 1 bis 4, dadurch gekennzeichnet, daß die 98 bis 99 %ige Schwefelsäure auf 40 bis 70° C abgekühlt und die kristallisierten Metallsulfate und/oder -hydrogensulfate abgetrennt werden, bevor die Schwefelsäure beim Titanrohstoffaufschluß eingesetzt wird.

## Claims

1. A process for the production of titanium dioxide by the sulfate method by digestion of titanium raw materials with sulfuric acid, hydrolysis of the titanyl sulfate produced, removal of the thin acid from the hydrolyzate, concentration of the thin acid by evaporation to a such a concentration that a 60 to 70% sulfuric acid is separated from the solid metal sulfates present and reuse of the sulfuric acid concentrated by evaporation in the digestion of the titanium raw materials, characterized in that, in another concentration stage II, the 60 to 70% sulfuric acid is concentrated by evaporation to a concentration of 70 to 80% $H_2SO_4$ and in that part of this sulfuric acid is brought

by absorption of $SO_3$ to a concentration of 98 to 99% $H_2SO_4$ and is subsequently used with the remaining part of the 70 to 8O% concentrated sulfuric acid in the digestion of the titanium raw materials.

**2.** A process as claimed in claim 1, characterized in that the 70 to 80% sulfuric acid is divided up in such a way that a sulfuric acid concentration of 88 to 93% is obtained by mixing the 98 to 99% sulfuric acid with the remaining 70 to 80% sulfuric acid.

**3.** A process as claimed in claim 1 or 2, characterized in that the concentration stage II is carried out in vacuo in forced circulation evaporators with graphite heat exchangers.

**4.** A process as claimed in claim 1 or 2, characterized in that the concentration stage II is carried out in vacuo in forced circulation evaporators or horizontal evaporators with tantalum tube heat exchangers.

**5.** A process as claimed in one or more of claims 1 to 4, characterized in that the 98 to 99% sulfuric acid is used directly, i.e. without separation of the metal sulfates, with a temperature of 40 to 130 °C in the digestion of the titanium raw materials.

**6.** A process as claimed in one or more of claims 1 to 4, characterized in that the 98 to 99% sulfuric acid is cooled to 40 to 70 °C and the crystallized metal sulfates and/or hydrogen sulfates are removed before the sulfuric acid is used in the digestion of the titanium raw materials.

## Revendications

**1.** Procédé de préparation de dioxyde de titane par le procédé au sulfate, par attaque sulfurique de matières premières contenant du titane, hydrolyse du sulfate de titanyle ainsi produit, séparation de l'acide dilué de l'hydrolysat, concentration par évaporation de l'acide dilué jusqu'à une concentration telle qu'un acide sulfurique à 60 - 70 % soit séparé des sulfates métalliques solides présents et réutilisation de l'acide sulfurique concentré par évaporation dans l'attaque de matières premières contenant du titane, caractérisé en ce que l'acide sulfurique à 60 - 70 % est concentré dans une autre étape II de concentration par évaporation à une concentration de 70 à 80 % de $H_2SO_4$, et en ce qu'une partie de cet acide sulfurique est portée, par absorption de $SO_3$, à une concentration en $H_2SO_4$ de 98 à 99 %, puis utilisée avec la partie restante d'acide sulfurique concentré par évaporation à 70 - 80 % dans l'attaque de matières premières contenant du titane.

**2.** Procédé suivant la revendication 1, caractérisé en ce que l'acide sulfurique à 70 - 80 % est réparti de façon telle que l'on obtienne par mélange de l'acide sulfurique à 98 - 99 % avec l'acide sulfurique à 70 - 80 % restant une concentration en acide sulfurique dans la plage de 88 à 93 %.

**3.** Procédé suivant l'une des revendications 1 et 2, caractérisé en ce que l'étape II de concentration par évaporation est conduite sous vide dans des évaporateurs à circulation forcée comportant des échangeurs de chaleur en graphite.

**4.** Procédé suivant l'une des revendications 1 et 2, caractérisé en ce que l'étape II de concentration par évaporation est conduite sous vide dans des évaporateurs à circulation forcée ou dans des évaporateurs horizontaux comportant des échangeurs de chaleur à tubes en tantal.

**5.** Procédé suivant une ou plusieurs des revendications 1 à 4, caractérisé en ce que l'acide sulfurique à 98 - 99 % est utilisé directement dans l'attaque de matières premières contenant du titane sans séparation des sulfates métalliques, à une température de 40 à 130 °C.

**6.** Procédé suivant une ou plusieurs des revendications 1 à 4, caractérisé en ce que l'acide sulfurique à 98 - 99 % est refroidi à 40 - 70 °C, et les sulfates et/ou hydrogénosulfates métalliques cristallisés sont séparés avant que l'acide sulfurique ne soit utilisé dans l'attaque de matières premières contenant du titane.